# EUROPEAN PATENT APPLICATION

(11) **EP 0 954 154 A2**
(43) Date of publication of application: **03.11.1999**
(21) Application number: 99107329.7
(22) Date of filing: 20.04.1999
(51) Int. Cl.: H04M 3/50

(54) **Sharing of voice-switched network and internet resources for intelligent session processing**

(30) Priority: 01.05.1998 US 71021
(71) Applicant: AT&T Corp., New York, NY 10013-2412 (US)
(72) Inventor: Bruno, Richard Frank, Morristown, New Jersey 07960 (US); Katseff, Howard Paul, Englishtown, New Jersey 07726 (US); Markowitz, Robert Edward, Glen Rock, New Jersey 07452 (US); Robinson, Bethany Scott, Lebanon, New Jersey 08833 (US); Rosen Kenneth H., Middletown, New Jersey 07748 (US)
(74) Representative: Modiano, Guido, Dr.-Ing.

(57) **Abstract**

A method and a system for connecting a call to an agent that is connected to disparate telecommunications networks. A query is received from one of the disparate telecommunications networks regarding an availability of an agent for receiving a call. The availability of each of a plurality of agents is determined, and an agent is selected. Routing instructions are determined for routing the call from the telecommunications network from which the query was received to the selected agent. The query is then responded to by communicating the determined availability of the agent and the routing instructions to the telecommunications network from which the query was received using SS7 signaling.

## Description

### BACKGROUND OF THE INVENTION

### 1. Field of the Invention

The present invention relates to the field of telecommunications. More particularly, the present invention relates to a method and a system for determining the availability of an agent.

### 2. Description of the Related Art

Presently, there are problems in determining the availability of an agent who can be reached by disparate telecommunications networks or network options because agent availability information is not presently being shared by disparate networks. There are currently no resources that are shared by disparate networks so that, when a connection is completed to an agent, information regarding the availability of the agent is not shared by the different networks connected to the agent. Consequently, when a call or session is connected to an agent, the other networks that can be connected to the same agent are presently unable to ascertain the actual availability of the agent.

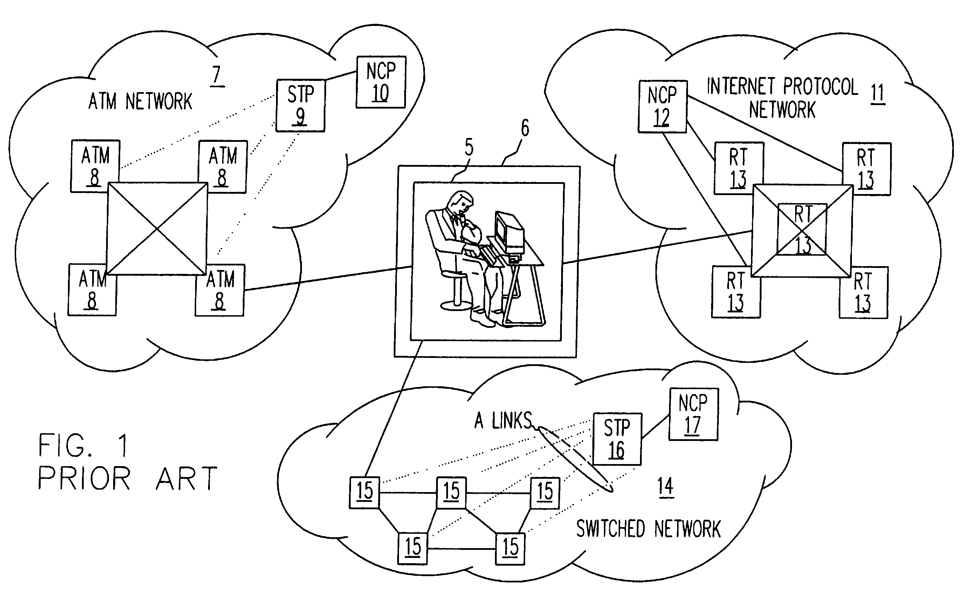

Figure 1 shows a block diagram of a plurality of disparate telecommunications networks that are connected to an agent 5 located at a call processing center 6. While Figure 1 shows only one agent 5, it should be understood that a plurality of agents can be located at the call processing center 6. The term "agent", as used herein, refers to a person who is working in a call processing center, or a telemarketing center, and who is contacted by people for service. For example, an agent is contacted by people seeking help or advice from a help desk service, desiring to purchase items from a mail-order company, etc.

Agent 5 can receive calls or sessions from a public Asynchronous Transmission Mode (ATM) network 7, from an Internet Protocol (IP) network 11 and from a circuit-switched telecommunications network 13. Each network includes network elements that are indigenous to that particular network. For example, ATM network 7 includes a plurality of interconnected ATM routers 8, at least one Signal Transfer Point 9, and at least one Network Control Point (NCP) 10 and possibly a permanent virtual circuit (not shown) via ATM connected to NCP 10. IP network 11 includes a plurality of interconnected routers (RT) 13 and an NCP 12. Circuit-switched telecommunications network 14 includes a plurality of interconnected toll-switches 15, at least one signal transfer point (STP) 16 and at least one NCP 17.

While both ATM network 7 and circuit-switched network 14 have NCP-type architectures, the network connections from ATM network 7 and circuit-switched network 14 to agent 5 are independent from each other and from connections to agent 5 from IP network 11. That is, each connection is completed to the agent regardless of whether the agent is already communicating over another network connection.

Within each network environment, Automatic Call Distributors (ACDs) have been used for intelligently distributing call to available agents. Nevertheless, conventional ACDs do not have the capability to receive information relating to disparate network connections for intelligently routing a call or session to an available agent because a conventional ACD operates only within a particular network environment in which the ACD is connected.

What is needed is a way to share information between disparate telecommunications networks about the availability of an agent.

### SUMMARY OF THE INVENTION

The present invention provides a way to share information between disparate telecommunications networks about the availability of an agent. The advantages of the present invention are provided by a method and a system for connecting a call to an agent that is connected to disparate telecommunications networks. According to the invention, a query is received from one of the disparate telecommunications networks regarding an availability of an agent for receiving the call. The availability of each of a plurality of agents is determined, and an agent is selected. Routing instructions are determined for routing the call from the telecommunications network from which the query was received to the selected agent. The query is then responded to by communicating the determined availability of the agent and the routing instructions to the telecommunications network from which the query was received using SS7 signaling. Preferably, the selected agent is selected based on one of an agent skill level and a most idle agent criteria, and the routing instructions are determined based on one of a lowest cost criteria, a hierarchical criteria, an RTNR/Optimized routing criteria, a time of day, a day of a week, a call origination location, and a network congestion condition. An availability entry in a database for the agent is updated to indicate that the agent is unavailable for receiving another call when the call is connected to the agent and to indicate that the agent is available for receiving another call when the call connected to the agent terminates.

### BRIEF DESCRIPTION OF THE DRAWING

The present invention is illustrated by way of example and is not limited in the accompanying figures in which like reference numerals indicate similar elements and in which:
Figure 1 is a block diagram of a plurality of disparate telecommunications networks that are connected to an agent;
Figure 2 is a block diagram showing an Agent Availability Network Control Point according to the present invention connecting disparate networks to an agent; and
Figure 3 is a block diagram showing functions provided by an Agent Availability Network Control Point according to the present invention.

### DETAILED DESCRIPTION

The present invention provides a system and a method for determining the availability of and for coordinating connections to a shared resource between users of disparate telecommunications networks, such as between circuit-switched telecommunications networks, ATM networks and/or the Internet. Further, the invention provides a system and a method for interconnecting Internet resources to an intelligent call processing network having a Network Control Point (NCP) architecture, thus enabling features such as call and/or session routing based on a time of day, a day of the week, the next available agent, etc. Further still, the present invention provides a system and a method for routing sessions over different networks using a common intelligent routing source in a manner that is similar to the way telephone calls are routed over a circuit-switched telecommunications network.

While the terms "call" and "session" have distinct meanings for the particular telecommunications networks with which they are respectively associated, for the purposes of the present invention, the terms "call" and "session" will be used interchangeably herein.

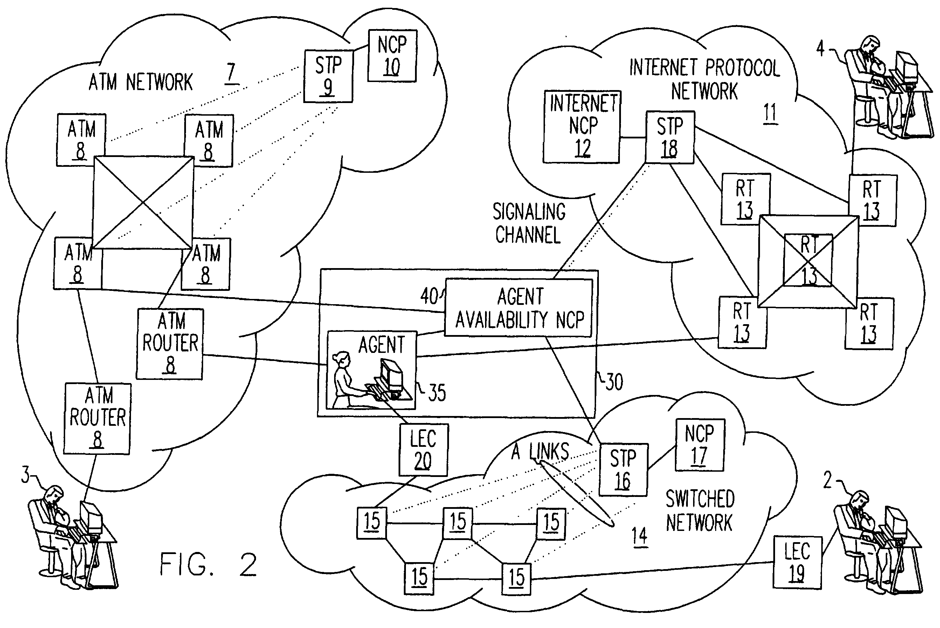

Figure 2 is a block diagram showing an Agent Availability Network Control Point (AANCP) 40 according to the present invention connecting disparate networks to an agent. In Figure 2, ATM network 7, Internet 11 and circuit-switched telecommunications network 14 are each connected to an agent station 35 that is located at a call processing center 30. Call processing center 30 also includes AANCP 40, which is connected to agent station 35. It should be understood, however, that AANCP 40 can be located remotely from call processing center 30.

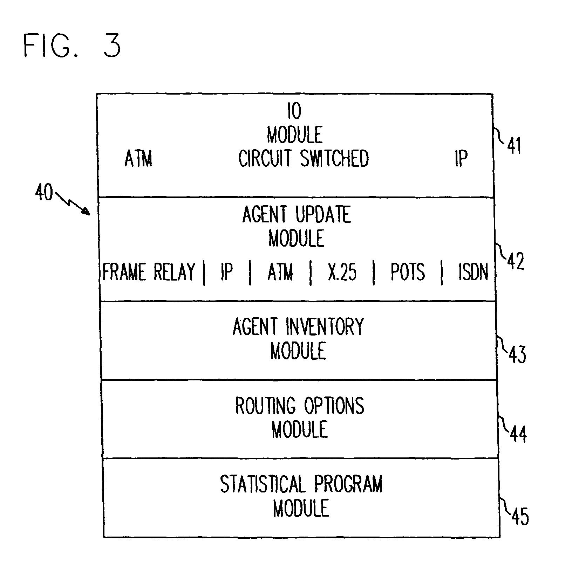

According to the present invention, AANCP 40 is a resource that is shared between the disparate networks 7, 11 and 14. AANCP 40 operates as an NCP processing queries regarding agent availability and providing selection logic, agent availability, and agent inventory/availability between separate networks. Figure 3 is a functional block diagram of AANCP 40 according to the present invention. As a processing platform, AANCP 40 includes an Input/Output (IO) module 41, an Agent Update module 42, an Agent Inventory module 43, a Routing Options module 44 and a Statistical Program module 45.

IO module 41 interfaces AANCP 40 to each disparate telecommunications network connected to AANCP 40 using SS7 signaling, a well-known layered signaling protocol that reliably transfers and delivers signaling information across a telecommunications network. Agent Update module 42 updates the availability status associated with each agent with respect to, for example, Frame Relay, IP, ATM, X.25, POTS and ISDN services. Agent Inventory module 43 includes a database containing information relating to agents, such as an agent skill level, a most-idle agent, etc. Routing Options module 44 includes a database containing information relating to different strategies, including Lowest Cost, Hierarchical, RTNR/Optimized Routing, etc., routing strategies. Statistical Program module 45 analyzes, for example, router utilization, traffic modeling, user utilization (time, packets (to/from)), etc., as AANCP 40 determines a suitable agent and appropriate routing for a call or session to the agent.

Suppose that a caller 2 (Figure 2), for example, desires to be connected to an agent located at call processing center 30. Caller 2 dials the telephone number for call processing center 30 and is connected to a Local Exchange Carrier (LEC) 19. Circuit-switched network 14 queries the database within AANCP 40 for determining the availability of an agent at call processing center 30 through STP 16 using SS7 signaling. In response, AANCP 40 accesses the agent inventory database in Agent Inventory module 43 (Figure 3) and returns a routing telephone number of a suitable available agent. Once the call is routed from LEC 19 through circuit-switched network 14 to LEC 20 and finally to the available agent, AANCP 40 updates an agent availability field in the database associated with the agent to indicate that the agent is not available. When the call to the agent is terminated or disconnected, AANCP 40 updates the agent availability field corresponding to the agent to indicate that the agent is available.

For an ATM session initiated by a caller 3, AANCP 40 is queried for an available agent at the start of a session, instead of routing the session to an NCP as is conventionally done. An available agent is selected by AANCP 40 and the routing address for the selected agent is sent to ATM NCP 10 through STP 9. ATM NCP 10 then routes the call from caller 3 through ATM routers 8 to the available agent using a well-known ATM routing strategy. When the session is connected, AANCP 40 updates the agent availability field in the database associated with the agent to indicate that the agent is not available. When the session is disconnected, the agent availability field corresponding to the agent is updated by AANCP 40 for indicating that the agent is available.

When AANCP 40 is queried through the Internet for agent availability for an IP session initiated by a caller 4, AANCP 40 determines a suitable agent and defines an Internet Address for the agent for setting up a session. AANCP communicates the Internet Address to Internet NCP 12 using SS7 signaling. Similar to the previously described exemplary network connections to agent 35, AANCP 40 determines a suitable agent and updates the agent availability field in the database associated with the agent when the session is connected to indicate that the agent is not available. When the session is disconnected, the agent availability field corresponding to the agent is updated by AANCP 40 for indicating that the agent is available.

For each example, AANCP 40 has a real-time view of agent availability that is continually updated for each agent. As a call or a session is set up or disconnected, the availability field corresponding to a newly available agent is updated in real time accordingly. AANCP 40 determines the routing instructions for a particular available agent based on the availability field for the agent.

According to the present invention, IP traffic, which is conventionally routed using a router-to-router technique (tunneling or tandeming), is routed over a route determined by Routing Options module 44 of AANCP 40 "looking down" at the entire Internet network 11. All available routing options are contained within Routing Options module 44 so the most appropriate route for a particular IP session is first determined based on, for example, selecting the most efficient path (fewest number of hops) through IP network 11 for ensuring talk quality of the call. The appropriate links are then established for creating a virtual circuit for the session. Virtual circuits are defined by AANCP 40 using "chunks of bandwidth", such as 4k, 16k, 64k, etc, that are then placed in routing segments of a database located at Internet NCP 12 and IP channelization is performed. By providing this type of routing for IP sessions, the present invention can provide advanced routing features for Internet/Intranet traffic using the same routing techniques that are used in circuit-switched telecommunications networks, such as time of day routing, date of week routing, geographical location routing, alternate routing in situations of network congestion.

While the present invention has been described in connection with the illustrated embodiments, it will be appreciated and understood that modifications may be made without departing from the true spirit and scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for connecting a call to an agent that is connected to disparate telecommunications networks, the method comprising the steps of:
receiving a query from one of a plurality of telecommunications networks regarding an availability of an agent for receiving a call, each telecommunications network being a disparate telecommunications network with respect to other telecommunications networks of the plurality of telecommunications networks, the agent being coupled to each disparate telecommunications network;
determining the availability of the agent;
responding to the query with the determined availability of the agent; and
connecting the call to the agent.

2. The method according to claim 1, further comprising the step of updating an availability entry for the agent to indicate that the agent is unavailable for receiving another call when the call is connected to the agent and to indicate that the agent is available for receiving another call when the call connected to the agent terminates.

3. The method according to claim 2, wherein the step of responding to the query uses SS7 signaling for communicating with the telecommunications network from which the query was received.

4. The method according to claim 1, wherein the step of determining an availability of the agent includes the steps of determining the availability of each agent of a plurality of agents and selecting an agent, and
wherein the step of responding to the query includes the step of determining routing instructions for routing the call from the telecommunications network from which the query was received to the selected agent.

5. The method according to claim 4, wherein the routing instructions are determined based on one of a lowest cost criteria, a hierarchical criteria, an RTNR/Optimized routing criteria, a time of day, a day of a week, a call origination location, and a network congestion condition.

6. The method according to claim 4, wherein the selected agent is selected based on one of an agent skill level and a most idle agent criteria.

7. The method according to claim 1, wherein at least one of the disparate telecommunications network is an NCP architecture network.

8. The method according to claim 7, wherein the NCP architecture network is a circuit-switched telecommunications network.

9. The method according to claim 7, wherein the NCP architecture network is an ATM network.

10. The method according to claim 7, wherein at least one of the disparate telecommunications network is an Internet resources network.

11. A system comprising:
an agent receiving calls from at least two disparate telecommunications networks; and
a processor coupled to the agent and to each telecommunications network from which the agent receives calls, the processor receiving a query from a telecommunications network regarding an availability of the agent for receiving a call, determining the availability of the agent and responding to the query with the determined availability of the agent.

12. The system according to claim 11, wherein the processor includes a memory storing an availability entry for the agent, the processor updating the availability entry for the agent to indicate that the agent is unavailable for receiving mother call when the call is connected to the agent and to indicate that the agent is available for receiving another call when the call connected to the agent terminates.

13. The system according to claim 12, wherein the processor communicates with each disparate telecommunications network using an SS7 signaling protocol.

14. The system according to claim 11, further comprising a plurality of agents, each agent being coupled to the at least two disparate telecommunications network for receiving calls from the telecommunications networks, and
wherein the processor is coupled to each agent, the processor receiving a query from a telecommunications network regarding an availability of an agent for receiving the call, determining the availability of each agent and responding to the query with routing instructions for routing the call from the telecommunications network from which the query was received to a selected agent.

15. The system according to claim 14, wherein the processor determines the routing instructions based on one of a lowest cost criteria, a hierarchical criteria, an RTNR/Optimized routing criteria, a time of day, a day of a week, a call origination location, and a network congestion condition.

16. The system according to claim 15, wherein the selected agent is selected by the processor based on one of an agent skill level and a most idle agent criteria.

17. The system according to claim 11, wherein at least one telecommunications network is an NCP architecture network.

18. The system according to claim 17, wherein the NCP architecture network is a circuit-switched telecommunications network.

19. The system according to claim 17, wherein the NCP architecture network is an ATM network.

20. The system according to claim 17, wherein at least one telecommunications network is an Internet resources network.
